# DEMANDE DE BREVET EUROPEEN

(11) **EP 4 403 391 A1**
(43) Date de publication de la demande: **24.07.2024**
(21) Numéro de dépôt: 24152157.4
(22) Date de dépôt: 16.01.2024
(51) Int. Cl.: B60H 1/00, F25B 30/02, B60H 1/32, F25B 6/02, F25B 13/00

(54) **SYSTEME DE POMPE A CHALEUR**

(30) Priorité: 17.01.2023 FR 2300427
(71) Demandeur: SNDC, 31860 Labarthe-sur-Leze (FR)
(72) Inventeur: SANCHEZ, Nicolas, 09100 La Tour de Crieu (FR); CASTERAS, Anthony, 31870 Lagardelle sur Lèze (FR); GUITTARD, Jean Marc, 81800 Rabastens (FR)
(74) Mandataire: Argyma

(57) **Abrégé**

L'invention concerne un système (1) de pompe à chaleur comprenant un circuit de fluide frigorigène principal (10) comprenant un échangeur de chaleur froid (110), un compresseur (120) placé en aval de l'échangeur de chaleur froid (110), dans le sens de chauffage (10A) du flux, et un échangeur de chaleur chaud (140) placé en aval du compresseur (120) et en amont du détendeur (150), ledit détendeur (150) placé en amont de l'échangeur de chaleur froid (110), dans le sens de chauffage (10A) du flux, le circuit de fluide frigorigène principal (10) comprend un réchauffeur (130) couplé à la sortie du compresseur (120), placé dans le flux de fluide frigorigène et configuré pour chauffer le fluide frigorigène haute pression sortant dudit compresseur (120).

## Description

### [Domaine technique]

La présente invention se rapporte au domaine des pompes à chaleur et concerne plus particulièrement un système de pompe à chaleur, notamment pour véhicule, ainsi qu'un véhicule comprenant un tel système et également un procédé associé.

### [Etat de la technique antérieure]

De nos jours, les systèmes de climatisation et de chauffage sont largement répandus dans les véhicules automobiles. Leur utilisation est double et doit pouvoir refroidir l'habitacle ou bien le réchauffer en fonction des conditions climatiques extérieures et des besoins des passagers dans l'habitacle.

L'utilisation de pompe à chaleur dans cette application, qui est une solution courante dans les utilisations de chauffage et de climatisation du tertiaire, a été adoptée depuis peu par les constructeurs de véhicules.

Comme pour les bâtiments, cette technologie est confrontée au faible rendement du dispositif de chauffage lors de températures basses. En effet, la performance se dégrade avec la baisse de la température externe pour devenir mauvaise sous 5°C, médiocre sous 0°C et inopérante sous -15°C.

Une solution connue consiste à ajouter des résistances électriques dans le canal de soufflage d'air vers l'habitacle, mais cette technique présente de nombreux inconvénients, notamment un mauvais rendement énergétique et des variations importantes de la température de soufflage d'air.

D'autres solutions ont été développées pour les pompes à chaleur dans les bâtiments, mais ne sont pas applicables aux véhicules automobiles. En effet, ces solutions consistent à intégrer une ou plusieurs résistances à l'intérieur du compresseur de la pompe à chaleur.

Or, un compresseur de pompe à chaleur pour bâtiment présente une architecture interne spécifique de tube en spirale et des dimensions importantes qui permettent facilement une telle intégration, ce qui n'est pas le cas dans un compresseur de pompe à chaleur de véhicule.

Il serait donc avantageux de proposer une solution simple, fiable et efficace permettant de remédier au moins en partie à ces inconvénients.

### [Exposé de l'invention]

A cette fin, l'invention a tout d'abord pour objet un système de pompe à chaleur, notamment pour véhicule, ledit système comprenant un circuit de fluide frigorigène principal configuré pour fonctionner dans un mode de chauffage dans lequel le flux de fluide frigorigène circule dans un sens dit « de chauffage », ledit circuit de fluide frigorigène principal comprenant un échangeur de chaleur dit « froid », un compresseur placé en aval de l'échangeur de chaleur froid, dans le sens de chauffage du flux, et un échangeur de chaleur dit « chaud » placé en aval du compresseur et en amont d'un détendeur, ledit détendeur étant placé en amont de l'échangeur de chaleur froid, dans le sens de chauffage du flux, un canal d'air étant défini entre l'échangeur de chaleur froid et l'échangeur de chaleur chaud, le système étant remarquable en ce que le circuit de fluide frigorigène principal comprend un réchauffeur couplé à la sortie du compresseur, placé dans le flux de fluide frigorigène et configuré pour chauffer le flux de fluide frigorigène haute pression sortant dudit compresseur.

Le réchauffeur permet d'élever la température du flux de fluide frigorigène en sortie du compresseur avant qu'il atteigne l'échangeur de chaleur chaud. Notamment, la traversée du réchauffeur par le flux de fluide frigorigène permet de chauffer efficacement ledit flux. Cela permet de réduire les pertes de charge et d'augmenter l'inertie du système. Ainsi, lorsque la température de l'air extérieur est basse, par exemple en-dessous de 5°C, le chauffage du flux de fluide frigorigène haute pression permet de conserver un rendement relativement élevé du système. L'utilisation d'un réchauffeur en sortie du compresseur permet d'éviter de monter un module de chauffage, notamment une ou plusieurs résistances électriques, à l'intérieur du compresseur, ce qui permet d'utiliser un compresseur standard de faible taille tout en évitant de le modifier, ce qui s'avérerait complexe et coûteux. De plus, le seul espace disponible dans un compresseur de véhicule pour monter une résistance se trouverait éventuellement dans la partie « basse pression » dudit compresseur, ce qui ne permettrait pas d'obtenir les avantages mentionnés ci-avant, notamment de maintenir le rendement à basse température de l'air extérieur.

Dans une forme de réalisation, le réchauffeur comprend un ou plusieurs éléments chauffants dans lequel ou dans lesquels baignent le fluide frigorigène afin de le réchauffer efficacement en sortie du compresseur. Autrement dit, le réchauffeur comprend au moins un élément chauffant configuré pour chauffer le fluide par contact.

Avantageusement, le réchauffeur est alimenté électriquement. Ce mode d'alimentation est simple et pratique, notamment pour des véhicules électriques ou hybrides, où il n'est pas possible de récupérer de la chaleur sur les circuits thermiques.

Dans une forme de réalisation, l'au moins un élément chauffant est une résistance électrique, qui est un équipement peu onéreux et aisé à installer et à utiliser.

De préférence, le réchauffeur comprend une pluralité de résistances électriques, par exemple deux, trois ou quatre, afin d'augmenter la puissance du réchauffeur.

En variante, l'au moins un élément chauffant pourrait être de type bobine à induction ou tout autre type d'élément chauffant adapté.

Avantageusement, le système comprend un module de pilotage configuré pour contrôler le réchauffeur, notamment pour contrôler la puissance du ou des éléments chauffants, en particulier pour permettre plusieurs niveaux de chauffage du fluide frigorigène en fonction des performances désirées et de la température extérieure.

Dans une forme de réalisation, le réchauffeur comprend un corps creux dans lequel est monté l'au moins un élément chauffant et comportant une entrée de fluide frigorigène reliée à la sortie du compresseur et une sortie du fluide frigorigène réchauffé. Le ou les éléments chauffants baignent dans le flux de fluide frigorigène qui est enfermé dans un corps creux, ce qui permet de le chauffer efficacement en sortie du compresseur.

De préférence, le corps présente une forme allongée, notamment pour loger des résistances électriques ou des bobines à induction de forme allongée et chauffer ainsi le fluide frigorigène sur une longueur significative du circuit.

De préférence encore, l'au moins un élément chauffant, notamment dans le cas d'une résistance électrique, présente une forme de tube plongeant monté dans ledit corps creux afin de chauffer efficacement le fluide frigorigène.

Avantageusement, le système de pompe à chaleur est réversible et comporte en outre un mode de refroidissement dans lequel le sens de circulation du fluide, appelé sens de refroidissement, est opposé au sens de chauffage. En effet, un système de pompe à chaleur réversible permet également de refroidir l'habitacle, notamment en cas de températures extérieures élevées.

L'invention concerne également un véhicule comprenant un système de pompe à chaleur tel que décrit précédemment, notamment un véhicule automobile ou tout autre type de véhicule pouvant être équipé d'un tel système.

Avantageusement, le véhicule est un véhicule électrique ou hybride comprenant une machine électrique et une batterie d'alimentation de ladite machine électrique. En effet, pour un véhicule thermique, le moteur alimente le compresseur mécaniquement et il n'est donc pas possible d'alimenter le réchauffeur autrement que par la batterie 12 V. Dans un moteur électrique, les batteries sont typiquement de 400 V ou 800 V. Une alimentation distincte du compresseur électrique, par exemple en 80 V, et du réchauffeur, par exemple en 400 V, devient donc possible.

Avantageusement encore, le véhicule comprend un échangeur de chaleur dit « de batterie » et un circuit de fluide frigorigène secondaire, reliant ledit échangeur de chaleur de batterie et la batterie afin d'échanger de la chaleur avec ladite batterie, et le système comprend un module de contrôle configuré pour commander le circuit de fluide frigorigène principal de sorte que le fluide frigorigène circule directement du réchauffeur à l'échangeur de chaleur chaud afin de réchauffer l'habitacle ou bien à travers l'échangeur de chaleur de batterie afin de réchauffer la batterie. Ce circuit de fluide frigorigène secondaire permet de réguler la température de la batterie en fonction des températures extérieures, ce qui est important dans l'assurance de ses performances électriques, notamment pour un véhicule électrique.

Avantageusement, le système de pompe à chaleur est réversible et comporte en outre un mode de refroidissement.

L'invention concerne également un procédé de chauffage à l'aide d'un système tel que décrit ci-dessus, ledit procédé comprenant une étape de chauffage du fluide frigorigène haute pression sortant du compresseur.

Avantageusement, lorsque le système comprend un module de pilotage, le procédé comprend une étape d'activation du réchauffeur, notamment d'un ou de plusieurs éléments chauffants du réchauffeur, en fonction de la température extérieure afin d'obtenir les performances désirées. En particulier, plus la température est basse, plus le module de pilotage active d'éléments chauffants.

De préférence, le module de pilotage est configuré pour fonctionner :
- dans un premier mode lorsque la température extérieure est supérieure à un premier seuil prédéterminé, dans lequel l'utilisation du réchauffeur n'est pas nécessaire (i.e. la température extérieure est suffisamment élevée pour que l'utilisation du réchauffeur ne soit pas nécessaire). Dans ce cas, le module de pilotage ne déclenche pas l'activation des résistances électriques dans le réchauffeur et la pompe à chaleur du véhicule fonctionne de façon classique et connue en soi ;
- dans un deuxième mode lorsque la température extérieure est comprise entre un deuxième seuil prédéterminé, inférieur au premier seuil, et le premier seuil, dans lequel le module de pilotage commande l'activation d'un unique élément chauffant du réchauffeur (ce mode est utilisé avantageusement lorsque la température est suffisamment basse pour réduire le coefficient de performance de la pompe à chaleur en-elle-même).

Avantageusement, dans le cas où la température extérieure est encore plus basse, en étant inférieure au deuxième seuil, ou que l'usager souhaite un chauffage plus rapide, le module de pilotage est configuré pour commander l'activation d'au moins un deuxième élément chauffant du réchauffeur. Le fluide en sortie de compresseur est donc chauffé encore plus avant de passer par l'échangeur de chaleur chaud et permet de chauffer l'air soufflé dans l'habitacle.

Dans une forme de réalisation, le système de pompe à chaleur étant configuré de telle façon à être réversible et à pouvoir aussi fonctionner en mode de refroidissement de l'air pour la climatisation de l'habitacle ainsi que de la batterie électrique, le procédé comprend une étape de climatisation de l'habitacle et/ou de refroidissement de la batterie électrique.

### [Description des dessins]

D'autres caractéristiques et avantages de l'invention apparaîtront encore à la lecture de la description qui va suivre. Celle-ci est purement illustrative et doit être lue en regard des dessins annexés sur lesquels :
[Fig. 1] La figure 1 illustre schématiquement une première forme de réalisation du système selon l'invention.
[Fig. 2] La figure 2 illustre schématiquement une forme de réalisation du réchauffeur du système de la figure 1.
[Fig. 3] La figure 3 illustre schématiquement une deuxième forme de réalisation du système selon l'invention.
[Fig. 4] La figure 4 illustre schématiquement une troisième forme de réalisation du système selon l'invention.

### [Description des modes de réalisation]

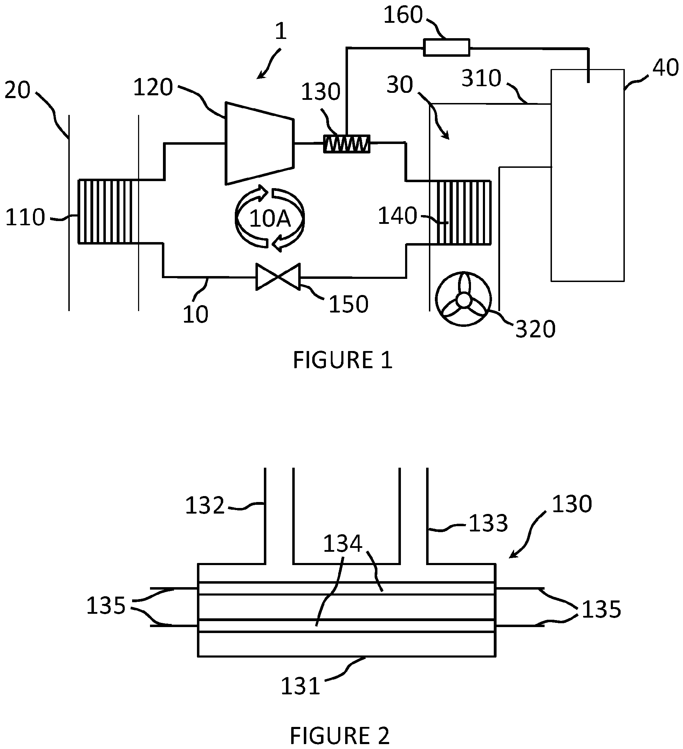

On a représenté sur les figures 1, 3 et 4 trois exemples de système 1 selon l'invention.

### Première forme de réalisation

On a représenté à la figure 1 un premier exemple de système 1 selon l'invention. Le système 1 selon l'invention est destiné à être monté dans un véhicule (non représenté).

Le véhicule peut être un véhicule automobile (voiture, camion, bus, ...), notamment électrique ou hybride, ou tout autre type de véhicule tel que, par exemple, une cabine de téléphérique, un aéronef, un navire, un train, etc.

### Système 1

Le système 1 est configuré pour fonctionner dans un mode de chauffage. Dans une forme de réalisation, le système 1 est en outre avantageusement configuré pour fonctionner dans un mode de refroidissement. En d'autres termes, dans cet exemple non limitatif, le système 1 est réversible.

### Circuit de fluide frigorigène principal 10

En référence à la figure 1, le circuit de fluide frigorigène principal 10 comporte, dans le sens dit « de chauffage » 10A, un échangeur de chaleur dit « froid » 110, un compresseur 120, un réchauffeur 130, un échangeur de chaleur dit « chaud » 140, un détendeur 150 et un module de pilotage 160.

L'échangeur de chaleur froid 110 est configuré pour que le fluide frigorigène qui passe à l'intérieur échange de la chaleur avec l'air extérieur acheminé par la prise d'air extérieur 20.

Le compresseur 120 est configuré pour augmenter la pression du fluide qui le traverse.

En référence à la figure 2, le réchauffeur 130 comprend un corps 131 creux allongé cylindrique pourvu d'un conduit d'entrée 132 relié à la sortie du compresseur 120 et d'un conduit de sortie 133 relié à l'échangeur de chaleur chaud 140.

Le réchauffeur 130 comprend en outre, dans cet exemple non limitatif, deux résistances électriques 134 en forme de tube dont la longueur est sensiblement identique, en étant légèrement inférieure, à la longueur du corps 131 allongé.

Le réchauffeur 130 comprend en outre des connexions électriques 135 permettant d'alimenter électriquement les résistances électriques 134. Les résistances électriques 134 baignent dans le flux du fluide frigorigène haute pression sortant du compresseur 120 afin de le réchauffer.

L'échangeur de chaleur chaud 140 est configuré pour échanger de la chaleur entre le fluide et l'air acheminé par le canal d'air 30.

Dans le sens de chauffage 10A, l'échangeur de chaleur froid 110 est appelé évaporateur, et l'échangeur de chaleur chaud 140 est appelé condenseur de façon connue en soi.

Le détendeur 150 est configuré pour faire baisser la pression du fluide frigorigène.

Le module de pilotage 160 est configuré pour commander le nombre de résistances électriques 134 allumées dans le réchauffeur 130 en fonction des conditions de température à l'extérieur et dans l'habitacle 40.

### Prise d'air extérieur 20

En référence à la figure 1, la prise d'air extérieur 20 permet d'amener de l'air extérieur au véhicule au contact de l'échangeur de chaleur froid 110.

### Canal d'air 30

En référence à la figure 1, le canal d'air 30 permet d'amener de l'air au véhicule au contact de l'échangeur de chaleur chaud 140 et de le projeter dans l'habitacle 40. Le canal d'air 30 peut, selon le mode de fonctionnement, acheminer de l'air de l'extérieur ou bien de l'air provenant de l'habitacle 40 qui est recyclé avant d'être réchauffé. Le recyclage de l'air étant connu en soi, il ne sera pas davantage décrit ici.

Le canal d'air 30 comporte un conduit d'aération 310 dans lequel se trouve l'échangeur de chaleur chaud 140 et un ventilateur 320 activable par l'usager du véhicule.

### Habitacle 40

L'habitacle 40 correspond à l'endroit dans lequel sont situés les usagers du véhicule et dont le système 1 permet de régler la température.

### Deuxième forme de réalisation

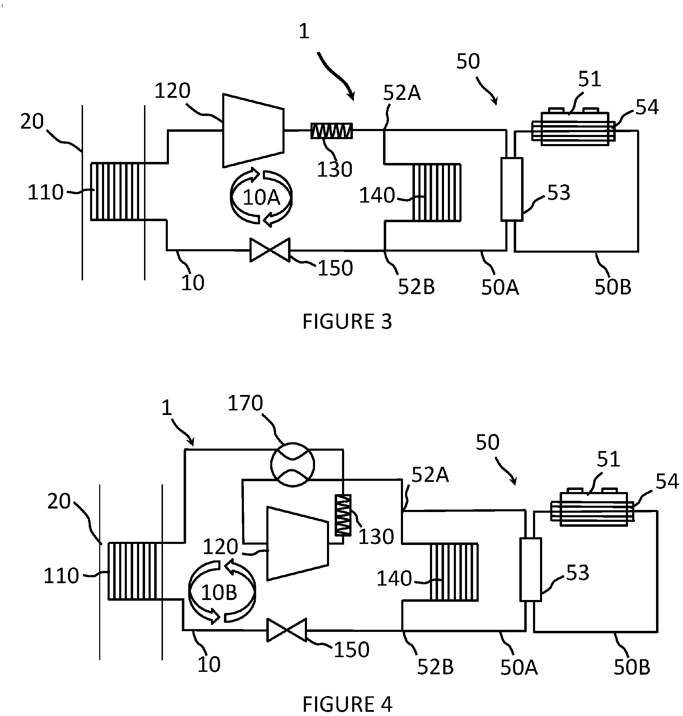

En référence à la figure 3, on a représenté un deuxième exemple de système 1 selon l'invention. Dans cette forme de réalisation, le système 1 comprend, outre les éléments déjà décrits ci-avant, un circuit de fluide frigorigène secondaire 50. Le canal d'air 30, l'habitacle 40 et le module de pilotage 160 sont présent mais ne sont pas représentés pour des raisons de clarté sur la figure 3.

Le circuit de fluide frigorigène secondaire 50 est un circuit de chauffage de la batterie électrique 51 du véhicule électrique. Le circuit de fluide frigorigène secondaire 50 comporte deux parties. La première partie 50A est reliée au circuit de fluide frigorigène principal 10 par deux embranchements 52A et 52B, respectivement entre le réchauffeur 130 et l'échangeur de chaleur chaud 140 pour l'embranchement 52A et entre l'échangeur de chaleur chaud 140 et le détendeur 150 pour l'embranchement 52B.

Un échangeur de chaleur dit « secondaire » 53 est présent sur la première partie 50A, entre les embranchements 52A et 52B.

Cet échangeur de chaleur secondaire 53 est configuré pour échanger de la chaleur entre le fluide du circuit de fluide frigorigène principal 10 qui passe dans la première partie 50A et le fluide du circuit de la deuxième partie 50B.

La deuxième partie 50B comprend l'échangeur de chaleur secondaire 53 et un échangeur de chaleur dit « de batterie » 54. L'échangeur de chaleur de batterie 54 entoure la batterie électrique 51.

### Troisième forme de réalisation

En référence à la figure 4, on a représenté un deuxième exemple de système 1 selon l'invention. Dans cette forme de réalisation, le système 1 comprend, outre les éléments déjà décrits dans les deux formes de réalisation ci-avant, un robinet inverseur 170 configuré pour assurer la réversibilité du système 1. Le canal d'air 30, l'habitacle 40 et le module de pilotage 160 sont présents mais ne sont pas représentés pour des raisons de clarté sur la figure 4.

Le robinet inverseur est relié à l'échangeur de chaleur froid 110, à l'entrée du compresseur 120, au réchauffeur 130 ainsi qu'à l'échangeur de chaleur chaud 140.

Dans le mode de réalisation représenté, l'invention correspondant au réchauffeur 130 est situé entre la sortie haute pression du compresseur 120 et le robinet inverseur 170.

De système (1) comme représenté sur la figure 4, le fluide frigorigène circule dans le sens dit « de refroidissement » 10B.

### Exemple de mise en oeuvre

Lorsque la température extérieure est basse, notamment en-dessous de 5°C, l'utilisateur et les éventuels usagers dans l'habitacle 40 utilisent le système 1 de la pompe à chaleur en mode chauffage, ce qui correspond à la forme de réalisation présentée à la figure 1.

Dans un premier cas d'utilisation, la température extérieure est suffisamment élevée pour que l'utilisation du réchauffeur 130 ne soit pas nécessaire. Dans ce cas, le module de pilotage 160 ne déclenche pas l'activation des résistances électriques 134 dans le réchauffeur 130 et la pompe à chaleur du véhicule fonctionne de façon classique et connue en soi.

Lorsque la température extérieure est suffisamment basse pour réduire le coefficient de performance de la pompe à chaleur en-elle-même, le système 1 est utilisé dans un premier mode de réalisation correspondant à la première forme de réalisation présentée ci-dessus.

Le module de pilotage 160 a la possibilité d'activer seulement une des deux résistances électriques 134 du réchauffeur 130. Le fluide qui passe par le réchauffeur 130 en sortie du compresseur 120 rentre dans le réchauffeur 130 par son conduit d'entrée 132, est réchauffé par l'une des résistances électriques 134 et sort son conduit de sortie 133 pour être acheminé dans le circuit de fluide frigorigène principal 10 jusqu'à l'échangeur de chaleur chaud 140.

L'échangeur de chaleur chaud 140 réchauffe l'air acheminé depuis l'extérieur par le canal d'air 30. Le ventilateur 320 permet de souffler l'air qui passe ainsi dans l'échangeur de chaleur chaud 140 et arrive dans l'habitacle 40 où se trouvent l'utilisateur et les éventuels passagers.

Dans le cas où la température extérieure est encore plus basse ou que l'usager souhaite un chauffage plus rapide, le module de pilotage 160 peut activer la deuxième résistance électrique 134 dans le réchauffeur 130.

Le fluide en sortie de compresseur 120 est donc chauffé encore plus avant de passer par l'échangeur de chaleur chaud 140 et permet de chauffer l'air soufflé dans l'habitacle 40.

Dans la forme de réalisation représentée sur la figure 2, le réchauffeur 130 comprend deux résistances électriques 134. Dans d'autres formes de réalisation le réchauffeur 130 comprend plus de deux résistances électriques 134.

Un deuxième mode de réalisation correspond à la deuxième forme de réalisation décrite ci-dessus et sur la figure 3. Le système 1 contient alors un circuit de fluide frigorigène secondaire 50 de maintien en température de la batterie électrique 51.

Le circuit de fluide frigorigène secondaire 50 est raccordé au circuit de fluide frigorigène principal 10 de la pompe à chaleur, le réchauffeur 130 permet donc aussi d'augmenter les performances de chauffage de la batterie électrique 51 pour des conditions extérieures de températures basses.

Dans la forme de réalisation présenté dans la figure 3, un embranchement 52A sépare le circuit fluide en deux : une partie de fluide sortant du réchauffeur 130 reste dans le circuit de fluide frigorigène principal 10 pour atteindre l'échangeur de chaleur chaud 140, tandis que l'autre rentre dans le circuit de fluide frigorigène secondaire 50 de maintien en température de la batterie électrique 51.

Le circuit de fluide frigorigène secondaire 50 est en deux parties. Dans la première partie 50A le fluide traverse l'échangeur de chaleur secondaire 53 et ensuite atteint l'embranchement 52B où il rejoint le circuit de fluide frigorigène principal 10 en aval de l'échangeur de chaleur chaud 140.

L'échangeur de chaleur secondaire 53 permet un échange de chaleur entre le fluide du circuit de fluide frigorigène principal 10 réchauffé par le réchauffeur 130 et le fluide de la deuxième partie 50B du circuit de fluide frigorigène secondaire 50.

Le fluide qui circule dans cette deuxième partie 50B atteint l'échangeur de chaleur de batterie 54 après avoir été chauffé dans l'échangeur de chaleur secondaire 53. Cet échangeur de chaleur de batterie 54 permet de réchauffer la batterie électrique 51 pour maintenir ses performances dans des conditions de basses températures.

Un troisième mode de fonctionnement correspond à la troisième forme de réalisation présentée ci-dessus et sur la figure 4. Dans cette forme, le système 1 de la pompe à chaleur est configuré de telle façon à être réversible et pouvoir aussi fonctionner en mode de refroidissement de l'air pour la climatisation de l'habitacle 40 ainsi que de la batterie électrique 51.

Dans le système 1 ainsi réversible, pour passer du mode de réchauffement de l'air extérieur tel que décrit plus haut à celui de refroidissement, l'usager actionne une commande qui modifie le robinet inverseur 170. En fonction de son orientation, le robinet inverseur 170 achemine le fluide de l'échangeur de chaleur froid 110 vers le compresseur 120 et ensuite envoie le fluide en sortie du compresseur 120 vers l'échangeur de chaleur chaud 140 dans le mode chauffage, et inversement achemine le fluide de l'échangeur de chaleur chaud 140 vers le compresseur 120 et ensuite envoie le fluide en sortie du compresseur 120 vers l'échangeur de chaleur froid 110 dans le mode de climatisation, auquel cas le fluide frigorigène circule dans le sens de refroidissement 10B.

## Revendications

1. Système (1) de pompe à chaleur, notamment pour véhicule, ledit système (1) comprenant un circuit de fluide frigorigène principal (10) configuré pour fonctionner dans un mode de chauffage dans lequel le flux de fluide frigorigène circule dans un sens dit « de chauffage », ledit circuit de fluide frigorigène principal (10) comprenant un échangeur de chaleur dit « froid » (110), un compresseur (120) placé en aval de l'échangeur de chaleur froid (110), dans le sens de chauffage (10A) du flux, et un échangeur de chaleur dit « chaud » (140) placé en aval du compresseur (120) et en amont d'un détendeur (150), ledit détendeur (150) étant placé en amont de l'échangeur de chaleur froid (110), dans le sens de chauffage (10A) du flux, le système (1) étant **caractérisé en ce que** le circuit de fluide frigorigène principal (10) comprend un réchauffeur (130) couplé à la sortie du compresseur (120), placé dans le flux de fluide frigorigène et configuré pour chauffer le flux de fluide frigorigène haute pression sortant dudit compresseur (120), ledit réchauffeur (130) comprenant un ou plusieurs éléments chauffants (134) dans lequel ou dans lesquels baignent le fluide frigorigène.

2. Système (1) selon la revendication 1, dans lequel le réchauffeur (130) est alimenté électriquement et dans lequel l'au moins un élément chauffant est une résistance électrique (134).

3. Système (1) selon la revendication précédente, dans lequel le réchauffeur (130) comprend une pluralité de résistances électriques (134) et le système (1) comprend un module de pilotage (160) configuré pour contrôler ladite pluralité de résistances électriques (134).

4. Système (1) selon la revendication 1, dans lequel l'au moins un élément chauffant pourrait être de type bobine à induction.

5. Système (1) selon l'une quelconque des revendications précédentes, dans lequel le réchauffeur (130) comprend un corps (131) creux de forme allongée dans lequel est montée l'au moins un élément chauffant (134).

6. Système (1) selon l'une quelconque des revendications précédentes, dans lequel l'au moins un élément chauffant, notamment dans le cas d'une résistance électrique, présente une forme de tube plongeant monté dans ledit corps creux

7. Système (1) selon l'une quelconque des revendications précédentes, dans lequel le système (1) de pompe à chaleur est réversible et comporte en outre un mode de refroidissement.

8. Véhicule comprenant un système (1) de pompe à chaleur selon l'une quelconque des revendications précédentes.

9. Véhicule selon la revendication précédente, ledit véhicule étant un véhicule électrique ou hybride comprenant une machine électrique et une batterie d'alimentation (51) de ladite machine électrique.

10. Véhicule selon la revendication précédente, dans lequel, un canal d'air (30), comportant l'échangeur de chaleur chaud (140), débouchant dans l'habitacle (40) du véhicule, le circuit de fluide frigorigène principal (10) du système (1) comprend un échangeur de chaleur dit « de batterie » (54) et un circuit de fluide frigorigène secondaire (50), reliant ledit échangeur de chaleur de batterie (54) et la batterie (51) afin d'échanger de la chaleur avec ladite batterie (51), le système (1) comprenant un module de contrôle configuré pour commander le circuit de fluide frigorigène principal (10) de sorte que le fluide frigorigène circule directement du réchauffeur (130) à l'échangeur de chaleur chaud (140) afin de réchauffer l'habitacle (40) ou bien à travers l'échangeur de chaleur de batterie (54) afin de réchauffer la batterie (51).

11. Procédé de chauffage à l'aide d'un système (1) selon l'une quelconque des revendications 1 à 7, ledit procédé étant **caractérisé en ce qu'**il comprend une étape de chauffage du fluide frigorigène haute pression sortant du compresseur (120).

12. Procédé selon la revendication précédente, dans lequel, lorsque le système (1) comprend un module de pilotage (160), le procédé comprend une étape d'activation du réchauffeur (130), notamment d'un ou de plusieurs éléments chauffants du réchauffeur (130), en fonction de la température extérieure.

13. Procédé selon l'une quelconque des revendications 11 ou 12, dans lequel le module de pilotage (160) est configuré pour fonctionner :
- dans un premier mode lorsque la température extérieure est supérieure à un premier seuil prédéterminé, dans lequel l'utilisation du réchauffeur (130) n'est pas nécessaire ;
- dans un deuxième mode lorsque la température extérieure est comprise entre un deuxième seuil prédéterminé, inférieur au premier seuil, et le premier seuil, dans lequel le module de pilotage (160) commande l'activation d'un unique élément chauffant du réchauffeur (130).

14. Procédé selon la revendication précédente, dans lequel, dans le cas où la température extérieure est encore plus basse, en étant inférieure au deuxième seuil, ou que l'usager souhaite un chauffage plus rapide, le module de pilotage (160) est configuré pour commander l'activation d'au moins un deuxième élément chauffant du réchauffeur (130).

15. Procédé selon l'une quelconque des revendications 11 à 14, dans lequel, le système (1) de pompe à chaleur étant configuré de telle façon à être réversible et à pouvoir aussi fonctionner en mode de refroidissement de l'air pour la climatisation de l'habitacle ainsi que de la batterie électrique, le procédé comprend une étape de climatisation de l'habitacle et/ou de refroidissement de la batterie électrique.
